# EUROPÄISCHE PATENTSCHRIFT

(11) **EP 0 677 420 B1**
(45) Veröffentlichungstag und Bekanntmachung des Hinweises auf die Patenterteilung: **11.08.1999**
(21) Anmeldenummer: 95103546.8
(22) Anmeldetag: 11.03.1995
(51) Int. Cl.: B60N 2/44, A47C 7/24

(54) **Sitz mit einer Polsterauflage**
Upholstered seat
Siège rembourré

(30) Priorität: 16.04.1994 DE 4413323
(43) Veröffentlichungstag der Anmeldung: 18.10.1995
(73) Patentinhaber: Bayerische Motoren Werke Aktiengesellschaft, 80788 München (DE)
(72) Erfinder: Beerbaum, Peter, D-85391 Allershausen (DE); Schreiner, Jürgen, D-80807 München (DE); Dietz, Ralf, D-80937 München (DE)

(56) Entgegenhaltungen:
- EP-A- 0 162 400
- EP-A- 0 280 148
- DE-A- 3 037 834
- DE-A- 4 214 510
- FR-A- 2 486 922
- GB-A- 1 121 230
- US-A- 3 591 876
- US-A- 3 972 098
- PATENT ABSTRACTS OF JAPAN vol. 010, no. 346 (M-537), 21.November 1986 & JP-A-61 146649 (DAIHATSU MOTOR CO LTD), 4.Juli 1986,

## Beschreibung

Die Erfindung betrifft einen Sitz mit einer Polsterauflage mit den im Oberbegriff des unabhängigen Patentanspruchs 1 angegebenen Merkmalen (s. EP-A-0 280 148, bei der anzunehmen ist, daß die Polsterauflage nach ihrer Befestigung an dem Polsterteil in einem separaten Arbeitsgang von einem Polsterbezug überdeckt wird).

Ein weiterer Sitz ist durch die DE-OS 14 30 902 bekannt, der ein mit einem Sitzgestell verbindbares Polsterteil und ein in eine Vertiefung im Polsterteil eingepaßte Polsterauflage aufweist. Die Polsterauflage ist durch Hinterschneidungen bildende Schrägwände der Ausnehmung an dem Polsterteil festgehalten.

Die aus Tier- oder Pflanzenhaar gefertigte Polsterauflage weist zu dem aus einem Schaumstoff gefertigten Polsterteil eine unterschiedliche Nachgiebigkeit auf, wodurch in der Sitzfläche im Bereich des Übergangs von der Polsterauflage zu dem Polsterteil ein Härtesprung auftritt, der den Sitzkomfort beeinträchtigt. Die Sitzauflage ist genau in die Ausnehmung in dem Polsterteil einzupassen. Bei größeren Bauteiltoleranzen ist eine Lückenbildung oder ein Umbiegen des seitlich die Vertiefung begrenzenden Randes des Polsterteiles nicht zu vermeiden.

Bei der DE-OS 29 12 461 ist eine aus Gummihaar bestehende Polsterauflage an einem Sitzkissen festgeklebt. Zur Befestigung eines die Polsterauflage überdeckenden Polsterbezugs sind in der Polsterauflage durchgehende Abheftkanäle gebildet, in die von dem Polsterbezug nach innen abstehende Abheftnähte von Spannelementen zu dem Sitzkissen belastet sind. Durch die feste Verbindung der Polsterauflage mit dem Sitzkissen ist nach der Nutzungszeit des Sitzes ein sortenreines Trennen der für den Sitz verwendeten Materialien erschwert.

Der in dem DE-GM 76 29 050 beschriebene Sitz weist eine mit einem Polsterteil verklebte Polsterauflage auf, die mit dem Polsterteil Taschen bildet, in die mit einem Polsterbezug verbundene Streifen teilweise einsteckbar sind. Auf diese Weise ist zwar der Polsterbezug abnehmbar, ein Trennen der Polsterauflage von dem Polsterteil ist jedoch nicht ohne weiteres möglich.

Bei dem in der DE-OS 31 27 303 angegebenen Sitz sind Seitenbereiche des Sitzes gegenüber einem Mittelteil verstellbar angeordnet. Im Übergangsbereich von dem Mittelteil zu dem betreffenden Seitenteil sind in dem Polsterteil Abheftkanäle gebildet, in die an der Innenseite eines Polsterbezugs vorgesehene Abheftnähte von einem Spannmittel zu dem Polsterteil belastet sind. Wie eine zwischen dem Polsterbezug und dem Polsterteil vorgesehene Polsterauflage an dem Polsterteil zu fixieren ist, um bei Bewegungen des Sitzbenutzers eine Querverlagerung der Polsterauflage zu vermeiden, ist dieser Schrift nicht entnehmbar.

Bei dem in der DE-A-3 037 834 angegebenen Sitz ist eine im Sinne des Oberbegriffes des Anspruchs 1 nicht lösbare Verbindung zwischen dem Polsterbezug und einem Polsterteil durch als Klipse gebildete, in einem Abheftkanal im Polsterteil angeordnete Haltemittel geschaffen, die zugleich als Spannelement für Einhängestreifen dienen, die von einem Stab aufgenommen werden und zum Polsterbezug reichen.

Der Erfindung liegt die Aufgabe zugrunde, einen Sitz mit den im Oberbegriff des unabhängigen Patentanspruchs 1 angegebenen Merkmale derart zu verbessern, daß der Sitz einfach montierbar und nach seiner Nutzungszeit in weitgehend sortenreine Einzelteile zu zerlegen ist, um eine Wiederverwendung der für den Sitz verwendeten Materialien zu erleichtern.

Diese Aufgabe ist durch die im unabhängigen Patentanspruch 1 angegebenen Merkmale gelöst.

Es ist somit nicht erforderlich die Polsterauflage fest mit dem Polsterteil zu verbinden, um nach der Befestigung des Polsterbezugs auch bei Bewegungen des Sitzbenutzers die Polsterauflage an dem Polsterteil festzuhalten. Nach der Montage des Polsterbezugs ist die Polsterauflage durch die fixierende Spannkraft des Polsterbezugs und/oder durch die Haltemittel an dem Polsterteil festgehalten. Die Haltemittel können durch Stifte, Clipse, Klettverschlüsse oder dergleichen gebildet sein. Bei Verwendung von Stiften können diese durch Kunststoffäden gebildet sein, die beispielsweise bei der Anbringung von Auszeichnungsetiketten an Kleidungsstücken oder dergleichen verwendet werden. Die Haltemittel können gering dimensioniert sein. Es ist ausreichend, wenn die Haltemittel lediglich vor der Montage des Polsterbezugs die Polsterauflage an dem Polsterteil festhalten, um einen Transport des Polsterteiles zusammen mit der Polsterauflage an einen Montageort zu ermöglichen, an dem der Polsterbezug an dem Polsterteil bzw. an einem Tragteil zu befestigen ist.

Nach Ablauf der Nutzungszeit des Sitzes ist lediglich der Polsterbezug von dem Polsterteil zu lösen, damit nach dem Entfernen der Haltemittel die Polsterauflage und das Polsterteil für eine Wiederverwendung der Materialien zu trennen sind. Bei gering dimensionierten Haltemitteln, die beispielsweise mit einem erweiterten Kopfteil und am anderen Ende mit einem Widerhaken versehene Kunststoffäden sein können, ist lediglich eine geringe Kraftanwendung erforderlich, um beispielsweise durch Zug an der Polsterauflage die Kunststoffäden zu trennen und die Polsterauflage von dem Polsterteil zu lösen.

Vorteilhafte Ausgestaltungen der Erfindung sind Gegenstand von Unteransprüchen.

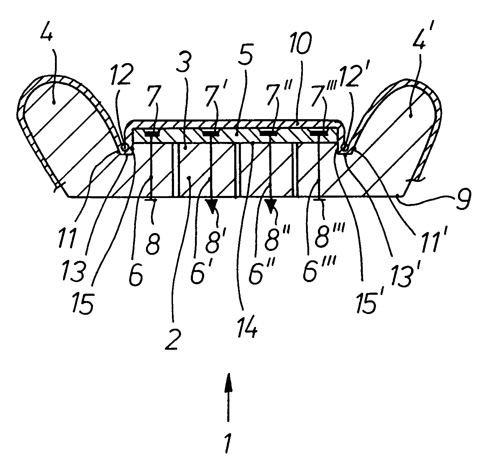

Ein Ausführungsbeispiel der Erfindung wird anhand einer Zeichnung mit einer einzigen Figur näher erläutert. Diese stellt einen horizontalen Schnitt durch die Rückenlehne eines Kraftfahrzeuges dar.

Der in der einzigen Figur in einem Horizontalschnitt durch die Rückenlehne 1 vereinfacht abgebildete Fahrzeugsitz weist ein in nicht dargestellter Weise an einem Lehnengestell abgestütztes Polsterteil 2 auf, das mit einem Mittelteil 3 eine Abstützfläche für den Rücken eines Sitzbenutzers bildet. An jeweils einen Seitenbereich des Mittelteiles 3 schließt sich ein Seitenteil 4, 4' des Polsterteiles 2 an, die dem Sitzbenutzer einen seitlichen Halt geben. Bei der Montage des Fahrzeugsitzes werden das Polsterteil 2 und eine an dem Mittelteil 3 anliegende Polsterauflage 5 über Haltemittel verbunden angeliefert. Die Haltemittel sind beispielsweise durch bei der Anbringung von Auszeichnungsetiketten an Kleidungsstücken oder dergleichen verwendete Kunststoffäden 6, 6', 6'', 6''' gebildet, die etwa gerade in die Polsterauflage 5 und in das Polsterteil 2 eingesteckt sind. Diese Kunststoffäden 6, 6', 6'', 6''' können - wie dargestellt - ein erweitertes Kopfteil 7, 7', 7'', 7''' und an dem anderen Ende einen Widerhaken 8, 8', 8'', 8''' aufweisen. Durch die zu den Widerhaken 8', 8'' unterschiedlichen Widerhaken 8, 8''' ist angedeutet, daß diese unterschiedliche, beispielsweise von dem Ausführungsbeispiel abweichende Formen aufweisen können. Der Figur ist nicht ohne weiteres entnehmbar, daß die Kopfteile 7, 7', 7'', 7''' elastisch und/oder so klein bemessen sind, daß diese bei der Sitzbenutzung von dem Sitzbenutzer nicht zu bemerken sind. Die Kopfteile 7, 7', 7'', 7''' sind außerdem so in der Polsterauflage versenkt, daß die Widerhaken 8, 8', 8'', 8''' an der Rückseite 9 des Polsterteiles 2 hervorstehen und das Polsterteil 2 hintergreifen. Sind das Polsterteil 2 und die Polsterauflage 5 durch die Kunststoffäden 6, 6', 6'', 6''' verbunden an einer Montagestelle angeliefert, wird das Polsterteil 2 und die Polsterauflage 5 von einem Polsterbezug 10 überdeckt. Zur Befestigung des Polsterbezugs 10 an dem Polsterteil 2 und zur endgültigen Fixierung der Polsterauflage 5 an dem Polsterteil 2 sind zwei lediglich symbolisch angedeutete Abheftnähte 11, 11' des Polsterbezugs 10 von einem Spannelement 12, 12' in je einen Abheftkanal 13, 13' belastet. Die Abheftkanäle 13, 13' sind im Bereich der seitlichen Kanten der Polsterauflage 5 im Übergangsbereich von dem Mittelteil 3 zu dem zugeordneten Seitenteil 4 bzw. 4' in dem Polsterteil 2 gebildet. Die Abheftnähte 11, 11' des Polsterbezugs 10 sind jeweils in einem zur Anlagefläche 14 der Polsterauflage 5 an dem Polsterteil 2 nahen Bereich in dem betreffenden Abheftkanal 13, 13' von dem Spannelement 12 bzw. 12' und einer Seitenwand 15, 15' des betreffenden Abheftkanals 13, 13' gestützt. Die Abheftnähte 11, 11' sind von den Spannelementen 12, 12' derart belastet, daß auch bei Bewegungen des Sitzbenutzers eine Querverlagerung der Polsterauflage 5 von dem Polsterbezug 10 allein oder zusammen mit den Kunststoffäden 6, 6', 6'', 6''' verhindert ist.

Die Erfindung kann auch in einer von dem Ausführungsbeispiel abweichenden Weise ausgeführt werden. Anstelle eines an einer äußeren Kante vorgesehenen Abheftkanals oder zusätzlich hierzu kann auch an einer inneren Kante der Polsterauflage 5 in dem Polsterteil 2 ein Abheftkanal vorgesehen sein, in den eine Abheftnaht des Polsterbezugs 10 belastet ist. Die Haltemittel können auf unterschiedliche Weise beispielsweise durch einen Clips- oder Klettverschluß gebildet sein. Die Haltemittel können durch einfache Teile gebildet sein, die lediglich sicherstellen, daß bei der Anlieferung der Sitzteile die Sitzauflage mit dem Polsterteil verbunden bleibt. Die Anzahl der am Polsterbezug vorgesehenen Abheftnähte ist vorgebbar. Vorzugsweise ist die Polsterauflage eine Gummihaarplatte, die als Meterware erhältlich ist und lediglich auf das erforderliche Maß zugeschnitten werden muß. Das Polsterteil kann aus einem Schaumstoff gefertigt sein, wobei in diesem Fall vorzugsweise von der Polsterauflage zur Rückseite des Polsterteiles verlaufende Kanäle vorzusehen sind, um eine gewünschte Wasserdampfdurchlässigkeit zu erreichen. Der Sitz ist auf einfache Weise zu fertigen und ermöglicht nach Ablauf der Nutzungszeit ein einfaches, sortenreines Trennen der verwendeten Materialien.

## Patentansprüche

1. Sitz mit einer Posterauflage (5), die vor der Befestigung eines Polsterbezugs (10) über Haltemittel (6, 6', 6'', 6''') lösbar auf einem Polsterteil (4) des Sitzes befestigt und danach vom über Befestigungs- (11, 11') und Spannelemente (12, 12') zu befestigen den Polsterbezug (10) überdeckt ist, wobei an einer äußeren oder inneren Kante der Polsterauflage (5) in dem Polsterteil (4) ein Abheftkanal (13, 13') ausgebildet ist, dadurch gekennzeichnet, daß die Haltemittel durch Clipse oder Klettverschlüsse oder in die Polsterauflage (5) und in das Polsterteil (2) eingesteckte Stifte (6, 6', 6'', 6''') gebildet sind, und in den Abheftkanal (13, 13') das als Abheftnaht (11, 11') gebildete Befestigungselement des Polsterbezugs (10) vom Spannelement (12, 12') belastet ist.

2. Sitz nach Anspruch 1, dadurch gekennzeichnet, daß bei Bewegungen des Sitzbenutzers eine Querverlagerung der Polsterauflage (5) von dem Polsterbezug (10) und/oder den Haltemitteln (6, 6', 6'', 6''') verhindert ist.

3. Sitz nach Anspruch 1 oder 2, dadurch gekennzeichnet, daß die Polsterauflage (5) eine der Quererstreckung eines Mittelteiles (3) des Sitzes entsprechende Breite aufweist und jeweils im Übergangsbereich von dem Mittelteil (3) zu einem Seitenteil (4, 4') des Sitzes ein Abheftkanal (13, 13') im Polsterteil (2) gebildet ist.

4. Sitz nach einem Ansprüche 1 bis 3, dadurch gekennzeichnet, daß die Polsterauflage (5) eine Gummihaarplatte ist.

5. Sitz nach einem der Ansprüche 1 bis 4, dadurch gekennzeichnet, daß die Abheftnaht (11, 11') des Polsterbezugs (10) in einem zur Anlagefläche (14) der Polsterauflage (5) an dem Polsterteil (2) nahen Bereich in dem Abheftkanal (13, 13') von dem Spannelement (12, 12') und einer Seitenwand (15, 15') des Abheftkanals (13, 13') gestützt ist.

6. Sitz nach einem der Ansprüche 1 bis 5, dadurch gekennzeichnet, daß der Stift (6, 6', 6'', 6''') ein erweitertes Kopfteil (7, 7', 7'', 7''') und/oder an seinem anderen Ende einen Widerhaken (8, 8', 8'', 8''') aufweist.

7. Sitz nach Anspruch 6, dadurch gekennzeichnet, daß der Stift ein zur Anbringung von Auszeichnungsetiketten an Kleidungsstücken oder dergleichen verwendeter Kunststoffaden (6, 6', 6'', 6''') ist, der etwa gerade in die Polsterauflage (5) und in das Polsterteil (2) eingesteckt ist.

8. Sitz nach Anspruch 6 oder 7, dadurch gekennzeichnet, daß bei eingestecktem Stift (6, 6', 6'', 6''') das Kopfteil (7, 7', 7'', 7''') in der Polsterauflage (5) versenkt ist und der Widerhaken (8, 8', 8'', 8''') an der Rückseite (9) des Polsterteiles (2) hervorstehend das Polsterteil (2) hintergreift.

9. Sitz nach einem Ansprüche 1 bis 8, dadurch gekennzeichnet, daß die Haltemittel vor der Montage des Polsterbezugs (10) die Polsterauflage (5) an dem Polsterteil (2) festhalten.

## Claims

1. A seat comprising an upholstery support (5) which is releasably secured by retaining means (6, 6', 6'', 6''') to an upholstery part (4) of the seat before a cover (10) over the upholstery is fastened, and is then covered by the cover (10), which is fastened by fastening elements (11, 11') and clamping elements (12, 12'), wherein a quilting duct (13, 13') is formed in the upholstery part (4) on the outer or inner edge of the support (5), characterised in that the retaining means are in the form of snap fasteners or Velcro fasteners or pins (6, 6', 6'', 6''') inserted into the support (5) and into the upholstery part (2), and the element in the form of a quilting seam (11, 11') for fastening the upholstery cover (10) is urged into the quilting duct (13, 13') by the clamping element (12, 12').

2. A seat according to claim 1, characterised in that the cover (10) and/or the retaining means (6, 6', 6'', 6''') prevent transverse displacement of the support (5) when the occupant of the seat moves.

3. A seat according to claim 1 or claim 2, characterised in that the support (5) has a width corresponding to the transverse extent of a middle part (3) of the seat, and a quilting duct (13, 13') is formed in the upholstery part (2) in the transition region from the middle part (3) to each side part (4, 4') of the seat.

4. A seat according to any of claims 1 to 3, characterised in that the support (5) is a rubberised hair board.

5. A seat according to any of claims 1 to 4, characterised in that the quilting seam (11, 11') of the upholstery cover (10) is supported by the clamping element (12, 12') and a side wall (15, 15') of the quilting duct (13, 13') in a region of the quilting duct (13, 13') near the surface (14) where the support (5) bears on the upholstery part (2).

6. A seat according to any of claims 1 to 5, characterised in that the pin (6, 6', 6'', 6''') has a widened head part (7, 7', 7'', 7''') and/or a barb (8, 8', 8'', 8''') at its other end.

7. A seat according to claim 6, characterised in that the pin is a plastic thread (6, 6', 6'', 6''') for attaching price tickets to articles of clothing or the like and is inserted approximately straight into the support (5) and into the upholstery part (2).

8. A seat according to claim 6 or claim 7, characterised in that when the pin (6, 6', 6'', 6''') is inserted, the head part (7, 7', 7'', 7''') is countersunk in the support (5) and the barb (8, 8', 8'', 8''') projects beyond the back (9) of the upholstery part (2) and grips behind the upholstery part (2).

9. A seat according to any of claims 1 to 8, characterised in that the retaining means secure the support (5) to the upholstery part (2) before the cover (10) is fitted.

## Revendications

1. Siège, avec un rembourrage (5), qui, avant la fixation d'un revêtement de rembourrage (10), est fixé de façon désolidarisable, par l'intermédiaire de moyens de maintien (6, 6', 6'', 6'''), sur une partie rembourrée (4) du siège, puis est recouvert par le revêtement de rembourrage (10), à fixer par l'intermédiaire d'éléments de fixation (11, 11') et d'éléments de mise sous tension (12, 12'), un canal d'agrafage (13, 13') étant réalisé dans la partie rembourrée (4), à l'emplacement d'une arête extérieure ou intérieure du rembourrage (5),
caractérisé en ce que
les moyens de maintien sont constitués par des clips ou des fermetures à crampons ou bien des tiges (6, 6', 6'', 6''') enfichées dans le rembourrage (5) et dans la partie rembourrée (2), et l'élément de fixation, constitué sous forme de couture d'attaches (11, 11'), du revêtement de rembourrage (10) est chargé par l'élément de mise sous tension (12, 12') placé dans le canal d'agrafage (13, 13') de rangement.

2. Siège selon la revendication 1,
caractérisé en ce qu'
en cas de déplacement de l'utilisateur du siège tout déplacement transversal du rembourrage (5) est empêché par le revêtement de rembourrage (10) et/ou par les moyens de maintien (6, 6', 6'', 6''').

3. Siège selon la revendication 1 ou 2,
caractérisé en ce que
le rembourrage (5) présente une largeur correspondant à la dimension transversale d'une partie centrale (3) du siège et, chaque fois dans la zone de transition entre la partie centrale (3) et une partie latérale (4, 4') du siège, étant constitué un canal de d'agrafage (13, 13') dans la partie rembourrée (2).

4. Siège selon la revendication 1 à 3,
caractérisé en ce que
le rembourrage (5) est constitué d'une plaque de poils en caoutchouc.

5. Siège selon l'une des revendications 1 à 4,
caractérisé en ce que
la couture d'attache (11, 11') du revêtement de rembourrage (10) est soutenue, dans une zone proche de la surface d'appui (14) du rembourrage (5), sur la partie rembourrée (2), dans le canal d'agrafage (13, 13'), par l'élément de mise sous tension (12, 12') et par une paroi latérale (15, 15') du canal d'agrafage (13, 13').

6. Siège selon l'une des revendications 1 à 5,
caractérisé en ce que
la tige (6, 6', 6'', 6''') comporte une partie de tête (7, 7', 7'', 7''') élargie et/ou, à son autre extrémité, un contre-crochet (8, 8', 8'', 8''').

7. Siège selon la revendication 6,
caractérisé en ce que
la tige est un fil en matière plastique (6, 6', 6'', 6''') utilisé pour appliquer les étiquettes sur des pièces de vêtements ou analogue, qui est enfiché de façon à peu près droite dans le rembourrage (5) et dans la partie rembourrée (2).

8. Siège selon la revendication 6 ou 7,
caractérisé en ce que
auprès de la tige (6, 6', 6'', 6''') à enficher, la partie de tête (7, 7', 7'', 7''') est noyée dans le rembourrage (5) et le contre-crochet (8, 8', 8'', 8''') saisit par l'arrière la partie rembourrée (2) faisant saillie au niveau de la face arrière (9) de la partie rembourrée (2).

9. Siège selon la revendication 1 à 9,
caractérisé en ce que
les moyens de maintien assurent la fixation du rembourrage (5) sur la partie rembourrée (2), avant le montage du revêtement de rembourrage (10).
